Europäisches Patentamt

European Patent Office

Office européen des brevets

(11) Publication number: **0 262 764**
A1

# EUROPEAN PATENT APPLICATION

(21) Application number: 87306503.1

(22) Date of filing: 23.07.87

(51) Int. Cl.4: **E02F 3/43** , E02F 3/84 ,
E02F 5/14 , E02F 9/20 ,
E02F 9/22 , E02F 9/26

(30) Priority: 30.09.86 US 913492

(43) Date of publication of application:
06.04.88 Bulletin 88/14

(84) Designated Contracting States:
DE FR GB NL SE

(71) Applicant: Spectra-Physics Inc.
3333 North First Street
San Jose California 95134-1995(US)

(72) Inventor: Cain, Gary Lynn
7070 E. Ross Road
New Carlisle Ohio 45344(US)

(74) Representative: Warren, Keith Stanley et al
BARON & WARREN 18 South End Kensington
London W8 5BU(GB)

(54) Elevation indication system for a large earthworking implement.

(57) An earthworking implement elevation indicator
system (10) is disclosed for indicating the elevation
at which the implement (14) is working the earth.
The elevation indicator system (10) includes a beam
sensor (44) which is mounted to a movable member
(28) of the implement (14) for sensing the presence
and elevation of a beam of light (12) with respect
thereto. A radio transmitter responsive to the beam
sensor (44) is provided for transmitting a radio signal
indicating the elevation of said beam. A power sup-
ply is provided for supplying power to the sensor
(44) and radio transmitter. A radio receiver is pro-
vided for receiving the radio signal. An operator
viewable display is provided for displaying the eleva-
tion of the beam of light (12), so that an operator is
provided with a visual indication of the relative eleva-
tion of the movable member (28).

FIG.1

## ELEVATION INDICATING SYSTEM FOR A LARGE EARTHWORKING IMPLEMENT

The present invention relates to an elevation indicating system, and more particularly to a laser actuated elevation indicating system for a large earthworking implement, such as a mine shovel.

In earthworking activities such as mining, it is important for an operator of an earthworking implement such as a mine shovel, to be aware of the relative elevation of the implement. For example, in strip mining, it is desirable to extract materials at a specified elevation and to maintain a generally horizontal excavation.

It is difficult for a shovel operator in a large mining site to know the exact depth at which he is digging, and to maintain the excavation at a constant elevation over an extended area. One method used commonly in the construction industry for providing an indication of elevation of relatively small earthworking equipment involves the use of a laser to provide a constant reference elevation. A rotating laser beam continuously sweeps a 360° arc to define a generally horizontal reference plane at a predetermined elevation. Laser beam sensing apparatus, mounted on the earthworking equipment, detects the laser beam. Electrical signals indicating the presence of the laser beam, and the relative elevation at which it strikes the sensing apparatus are then conducted to a display.

The operator monitors the display and can then either raise or lower the blade of the earthworking apparatus in response to the displayed information. Alternatively, the electrical signals indicating beam position may be supplied to a control mechanism, such as a hydraulic or pneumatic cylinder, to raise or lower the blade automatically.

Several laser elevation detecting systems are described in the patent literature. Carson, U.S. Patent No. 4,200,787 relates to an omnidirectional laser sensing apparatus wherein a plurality of fiberoptic fibers are placed in a cylindrical array to receive light from all directions. Light received by all fibers at a particular elevation is conducted to a particular photodetector. The information from the photodetector is then relayed to a display panel to indicate the relative elevation of the blade of the apparatus.

Johnson, U.S. Patent No. 4,162,708 relates to a detecting array for receiving and detecting light from a laser beam source. An electrical conductor couples the detecting means to displays and controls in the cab of the road grader on which the apparatus is mounted.

Teach, U.S. Patent No. 4,129,224 relates to the use of a laser beam sensor unit mounted on a backhoe. The sensor unit is mounted on the boom of the backhoe. Transducers are also provided to detect the relative angles of the outreach boom, downreach boom, and bucket of the backhoe. The detector, transducers, and associated circuitry cooperate to maintain the digging bucket at the proper digging angle and depth.

Teach, U.S. Patent No. 4,034,490 relates to the use of a laser beam detector to control the angular position of the digging frame of an endless chain type trencher. Scholl et al, U.S. Patent No. 3,887,012 relates to the use of a laser beam detector to control the blade of an earthworking machine, such as a road grader.

In some applications of laser beam actuated elevation detecting systems, difficulties are encountered in the transmission of the information from the laser sensor to the control mechanism. Difficulties arise because the laser sensor is usually placed on or close to the blade, bucket or boom part of the earthworking implement, and the control device is placed near or in the operator cab of the earthworking apparatus. Typically, information is transmitted by a conductor which extends between the laser sensor means on the boom or bucket, and the control mechanism in the cab. On relatively small earthworking equipment, such as road graders, trenchers, earthmovers and backhoes, a direct conductor cable generally provides a satisfactory means of transmitting data, as the distance between the laser sensor and the control mechanism is typically short. However, with very large earthworking implements, such as mining shovels, the distance between the laser sensor and the control mechanism is so great as to render the use of a conductor wire impractical. Additionally, the complexity and type of movement made by the boom and bucket of a large mine shovel could easily cause a cord or wire extending between the cab and the boom or bucket to become tangled.

Typically, mining shovels are rather large, on the order of 40 feet in height (as measured from the ground to the top of the shovel body), and have booms which are 50 feet long, and buckets capable of holding over 40 cubic yards of material. Typically, the length of the dipper stick which supports the bucket and which is attached to the boom, can be approximately 25 feet. As can be appreciated, it is not practical to run a conductor cable over the distance between the top of the dipper stick and the cab. Additionally, the type of movements made by the dipper stick and boom during the operation of the shovel would likely cause any cable extending between the cab and dipper stick to become tangled or broken.

It is therefore an object of the present invention to provide an improved, cordless means for transmitting data from a laser sensing device on a large earthworking implement to a control mechanism located some distance away from the laser sensing apparatus.

In accordance with the present invention, an earthworking implement elevation indicator system is provided for indicating the elevation at which the implement is working the earth. The elevation indicator system comprises a laser beam sensor means which is mounted to a movable member of the implement for sensing the presence of a beam of light at a reference elevation, and for providing a detection signal in response thereto. A radio transmitter means, responsive to said detection signal, is provided for transmitting the information provided by the sensor means. A power supply means is provided for supplying electrical power to the sensor means and the radio transmitter means. A radio receiver means receives the information transmitted by the transmitter means, and an operator viewable display means displays the information.

Preferably, the laser beam sensor means comprises a generally vertical spaced array of sensors. The power supply means comprises an array of solar cells and a plurality of reachargeable batteries. The display preferably comprises a vertically extending array of individual lights, each such light being indicative of a particular elevation for a movable member of the implement.

Thus, one feature of the present invention is that a radio transmitter is used to transmit information about the elevation of an implement member from a remote part of an earthworking implement to the operator cab of the earthworking implement. This feature has the advantage of obviating the need for running electrical conductors from the remote part of the implement to the cab. It is also a feature of the present invention that an array of solar cells are mounted on the dipper stick of a mining shovel near the transmitter and the sensor cells for providing electrical power to the transmitter and sensor cells. This obviates the need to run power cables from the shovel body to the dipper stick.

In order that the invention may be more readily understood, reference will now be made to the accompanying drawings in which:

Fig. 1 is a perspective view of an earthworking implement employing the elevation indicating system of the present invention;

Fig. 2 is a schematic representation of the elevation indicating system;

Fig. 3 is a front view of the operator display; and

Fig. 4 is an enlarged partial sectional view, taken generally along lines 4-4 in Fig. 3.

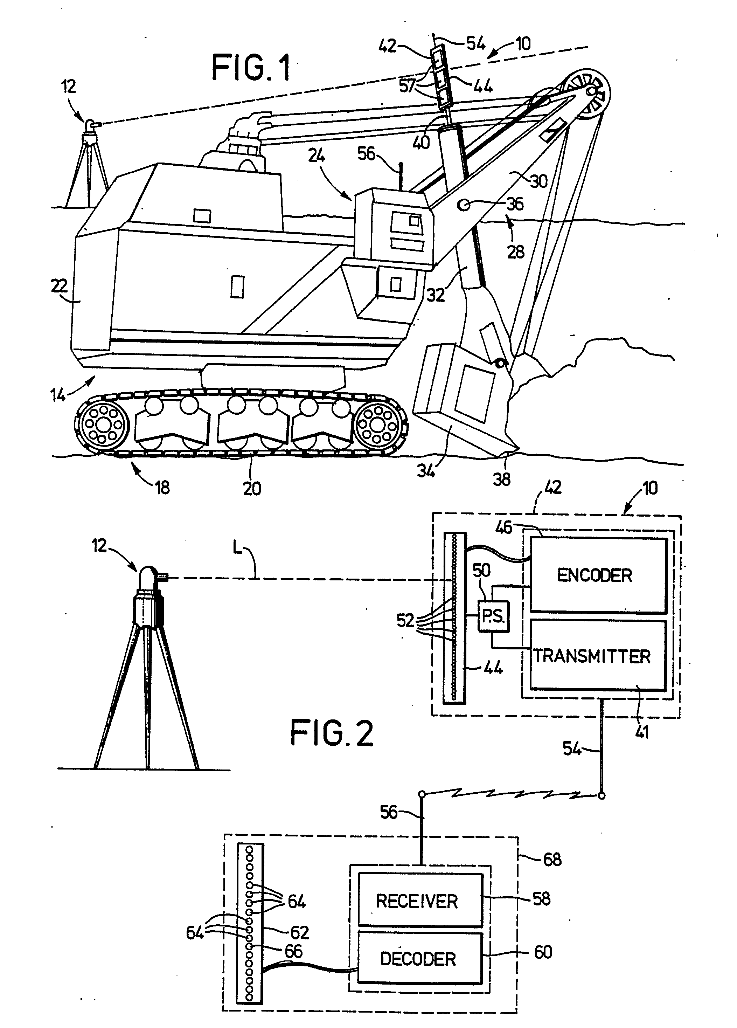

As shown in Figs. 1 and 2, an elevation indicating system 10, actuable by a beam L emitted by a laser source 12, is attached to a large earthworking implement, such as mining shovel 14, for aiding the operator of the mining shovel 14 in maintaining a selected elevation for the shovel. Mining shovel 14 includes an undercarriage 18 having an endless tread 20. The shovel 14 also includes a body 22 which houses the engine of the shovel 14 and a cab 24 from which the operator controls the shovel 14. The shovel 14 also includes a boom system 28 for performing the excavation. The mining shovel 14 shown in Fig. 1 is particularly well adapted for excavating coal in a strip mine. The boom system 28 includes an outreach boom member 30, a dipper stick 32 and a bucket 34. The outreach boom member 30 has a fixed length, and is pivotally mounted to the body 22.

The dipper stick 32 is mounted to outreach boom 30 by pivot 36. The bucket 34, pivotally journaled to the lower end of the dipper stick 32, includes a leading edge 38 having a plurality of teeth for facilitating the excavation of the mined material.

A mast 40 is fixed to the upper end of the dipper stick 32 for providing a place to mount some of the components of the elevation indicating means 10 contained in a housing 42. The components mounted on the mast include a sensor means 44 for sensing the laser beam L emitted by laser source 12, an encoding means 46 for processing the information received by the laser sensing means, a radio frequency transmitter means 48 for transmitting the data processed by the encoder 46, and a power supply means 50 for supplying power to the sensor means 44, encoder means 46, and radio frequency transmitter means 48.

The sensor means 44 comprises a generally vertically oriented array of photoreceptors 52 of conventional design. The photoreceptor array making up the sensor means 44 is illustrated in Fig. 1 as extending down one side of casing 42. An identical array, extending down the opposite side of casing 42, permits the beam L to be sensed regardless of the direction in which shovel 14 is turned. The photoreceptor array is about 47 inches in height.

Also mounted in casing 42 are the encoder means 46 (Fig. 2) and the radio frequency transmitter means 41 (Fig. 2). The encoder means 46 processes the information received from the photoreceptors 52 and places that information in a form which can be transmitted by the transmitter means 41 via antenna 54. Encoder means 46 may, for example, encode the photoreceptor receiving beam L as a binary signal. Transmitter 41 then transmits the binary signal as a series of pulses of r.f. energy, with the width of the pulses indicating "1" or "0". The transmitter 41 need not be exceedingly powerful, as the distance over which the information is transmitted is relatively short.

Power supply means 50 comprises a number of arrays 57 of solar cells which are mounted on one side of casing 42. A sufficient number of solar cells of conventional design are provided to supply the power necessary to operate the photoreceptors 52, encoder 46, and transmitter 41. The power supply 50 also includes a bank of rechargeable nickel cadmium batteries (not shown) which are continuously charged by the solar cells. The batteries ensure a constant supply of power to the system components during fluctuations in ambient lighting conditions.

The r.f. signal transmitted by transmitter 48 is received by antenna 56, and conducted to a receiver 58 disposed inside cab 24. Due to the large distance between the transmitter 48 and the receiver 56, it will be appreciated that a substantial amount of conductor cable would be necessary if a direct electrical coupling were to be maintained between the sensor means 44 and the cab 24. Additionally, it will be appreciated that the relative complexity of the movements of the outreach boom 30 and dipper stick 32 might cause such a cable to become entangled during the operation of the mine shovel 14. The communication link between the receiver 58 and transmitter 41 avoids these difficulties.

Receiver 58 supplies the information it receives to a decoder 60 which decodes the information into a form usable by a display means 62. The bindary coded information may preferably be decoded into a 1-of-15 format. Although decoder 60 is shown as a separate apparatus, it may comprise appropriate circuitry within the receiver 58.

The display means 62, including a plurality of lights 64, is provided for displaying the information received by the receiver 58 and decoded by decoder 60. Lights 64 are arranged in a vertical array and are switched on as the dipper stick 32 is raised or lowered to indicate its vertical position to the shovel operator. One of the lights, for example light 66, may be a different color. Light 66 is switched on when the dipper stick 32 is positioned with the bucket 34 at the desired level. The particular light of the array which is turned on is dependent upon which of the photocells 52 is receiving the beam of light L from the laser source 12. For example, if the uppermost photocell 52 receives the light L from laser source 12, power would be supplied to the bottom light in the array, indicating that the dipper stick is too low. Conversely, if the lowermost photocell 52 receives the beam of light L from laser beam generator 12, the uppermost light of the array would be switched on.

The device 10 operates as follows. Periodically, for example, at the beginning of a particular shift, the laser source 12 is set to project a rotating beam of laser light L at a particular elevation. The dipper stick 32 and bucket 34 are then positioned at the desired height for excavation, with the dipper stick 32 generally vertically. One of the photocells 52 will receive the laser light L, and one of the lights 64 wil be switched on. Since the bucket 34 is at the desired elevation, the particular light which is shining, for example light 66, can be marked to signal the operator during the shift that he is excavating at the proper elevation. One way to mark this particular light is to place a bulb of a different color in the appropriate socket.

If the operator attempts to excavate material at a level above the desired elevation, one of the lights 64 in the array above the light 66 will shine. Conversely, if one of the lights 64 below the light 66 shines, the operator will be alerted to the fact that the elevation at which he is excavating material is lower than the desired excavation level. So long as the operator ensures that excavations are being taken at a level corresponding to a level at which the light 66 is switched on, the excavation will be at a generally constant horizontal excavation.

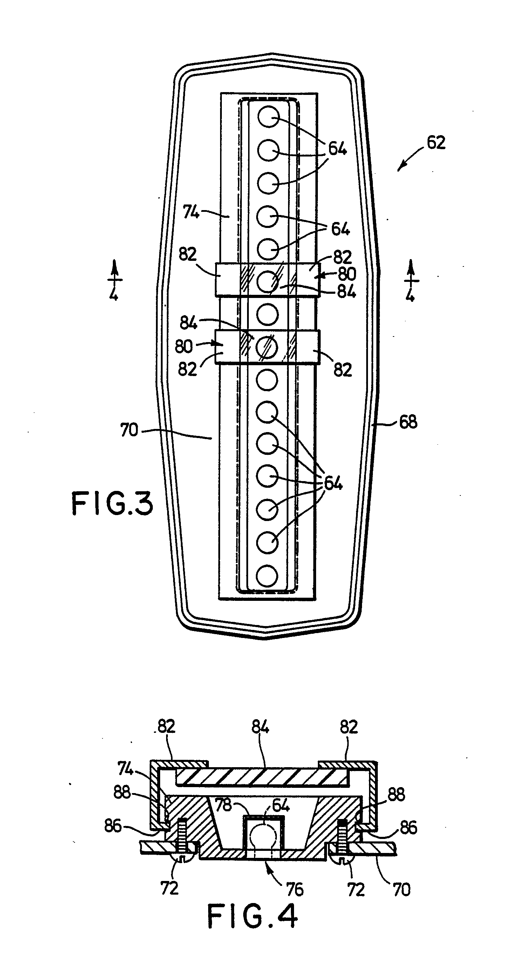

Reference is now made to Figs. 3 and 4 which illustrate a further embodiment of the display means 62 in greater detail. Display means 62 includes a casing 68 which has lights 64 mounted in a vertical array on its front face 70. Mounted on face 70 by means of screws 72 is an elongated guide member 74. Guide member 74 includes a plurality of openings 76 through which lights 64 and light covers 78 extend.

A pair of markers 80 are provided to indicate "high" and "low" excavation in lieu of using a light 64 or light cover 78 of a different color. As best seen in Fig. 4, each marker 80 includes a pair of support elements 82 and a transparent or translucent plastic strip 84 secured to support elements adhesively or by screws. Support elements 82 include a tab 86 which slidably engages corresponding slot 88. Slots 88 extend along the entire length of guide member 74 and permit markers 80 to be moved vertically as desired. Markers 80 may be held in position by frictional engagement between tabs 86 and slots 88 or, if desired, set screws (not shown) may be provided in threaded openings in support elements 82 to secure markers 80 in position on guide member 74.

At the beginning of the shift, the dipper stick 32 and bucket 34 are positioned at the desired height for excavation. One of the photocells 52 will be illuminated by the laser light beam L, and one of the lights 64 will be switched on. The markers 80 are then positioned above and below the shining light so as to define a range of acceptable excavation.

It will be appreciated that a great many more photoreceptors 52 will typically be provided than the number of lights 64. The switching on of a particular light 64 will indicate that one or more photoreceptors in a grouping having received laser light from source 12. While a system could be designed with an equal number of lights 64 and photoreceptors 52, a one-to-one correspondence is unnecessary where the excavation level need be maintained only within substantial margins.

Having described the invention in detail and by reference to preferred embodiments thereof, it will be apparent that modifications and variations are possible without departing from the scope of the invention defined in the appended claims.

## Claims

1. An earthworking implement elevation indicator system (10), characterized by:
beam sensor means (44) mounted to a movable member of said implement for sensing the presence and elevation of a beam of light (12) with respect thereto,
radio transmitter means (41), responsive to said beam sensor means (44), for transmitting a radio signal indicating the elevation of said beam,
power supply means (50) for supplying power to said sensor means (44), and said radio transmitter means (41),
radio receiver means (58) for receiving said radio signal, and
an operator viewable display means (62), responsive to said radio receiver means (58), for displaying the elevation of said beam of light (12), whereby an operator is provided with a visual indication of the relative elevation of said movable member.

2. An indicator system (10) according to claim 1 wherein said beam sensor means (44) comprises a generally vertically extending array of sensors (52).

3. An indicator system (10) according to claim 1 or 2, wherein the power supply means (50) comprises an array of solar cells (57).

4. An indicator system (10) according to claim 1, 2 or 3, wherein the power supply means (50) comprises an array of solar cells (57) disposed on said movable member of said implement (14).

5. An indicator system (10) according to any preceding claim, wherein said display means (62) comprises an array of lights (64), each light being indicative of a particular elevation of said movable member of said implement (14).

6. An indicator system (10) according to claim 5 wherein at least one of said lights (66) comprises a light of a color different than the remaining lights (64).

7. An indicator system (10) according to any preceding claim in which said display means (62) further comprises at least one movable marker (80) for indicating a desired level for said movable member.

8. In a mine shovel type earthworking implement (14) having a cab (24) for housing an operator, and a boom system (28) including a movable outreach boom member (30), a dipper stick (32) of a generally fixed length pivotably mounted to the outreach boom member (30), and a bucket (34) pivotably mounted to the dipper stick (32) below the outreach boom member (30), an elevation indicator system (10) characterized by:
beam sensor means (44) mounted to said dipper stick (32) for sensing the presence and elevation of a beam of light with respect thereto,
a radio transmitter means (41) mounted to the dipper stick (32) and responsive to said beam sensor means (44) for transmitting a radio signal indicating the elevation of said said dipper stick (32),
a power supply means (50) mounted to said dipper stick (32) for supplying electrical power to said sensor means (44), and said transmitter means (41),
a radio receiver means (58) mounted adjacent the cab (24) for receiving said radio signal, and
an operator viewable display means (62) disposed in the cab (24), the operator viewable display means (62) being responsive to said radio receiver means (58) for displaying the elevation of said beam of light, whereby an operator is provided with a visual indication of the relative elevation of said bucket (34).

9. An elevation indicator system (10) according to claim 8 wherein said power supply means (50) comprises an array of solar cells (57).

10. An elevation indicator system (10) according to claim 8 or 9, wherein said display means (62) comprises an array of lights (64), each light being indicative of a particular elevation of said bucket (34).

11. An elevation indicator system (10) according to claim 8, 9 or 10 wherein said power supply means (50) comprises an array of solar cells (57) disposed on said dipper stick (32) generally above said outreach boom member (30).

12. An elevation indicator system (10) according to claim 8, 9,10or 11 wherein said beam sensor means (44) comprises a plurality of photoreceptors (52) arranged in a generally vertical array.

## FIG.1

## FIG.2

ENCODER

TRANSMITTER

P.S.

RECEIVER

DECODER

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | BRAUNKOHLE, vol. 34, no. 4, April 1982, pages 108-112,Düsseldorf, DE; J.F. HARRISON et al.: "Application of laser technology to the digging of bench levels with a bucket wheel excavator" * Pages 108-112 * | 1,5,6, 10 | E 02 F 3/43 E 02 F 3/84 E 02 F 5/14 E 02 F 9/20 E 02 F 9/22 E 02 F 9/26 |
| A | Idem | 2,7 | |
| X | DE-A-3 506 326 (P. HARMS) * Whole document * | 1-5,7,9 -12 | |
| A | | 6,8 | |
| A | PATENT ABSTRACTS OF JAPAN, vol. 6, no. 249 (M-177)[1127], 8th December 1982; & JP-A-57 146 840 (KIYATAPIRAA MITSUBISHI K.K.) 10-09-1982 | 1,5-10 | |
| A | CA-A-1 177 959 (R. COUTURE et al.) * Claims 1-15; figures 1-3 * | 1,5-7 | |
| A | DE-A-3 228 108 (R. JUNKE) * Page 6, line 26 - page 9, line 2; figure 1-3 * | 1,7,8 | TECHNICAL FIELDS SEARCHED (Int. Cl.4) E 02 F |
| A | DE-A-2 919 505 (KOMATSU) * Claims 1-8; figures 1-12 * | 1 | |
| A | FR-A-1 452 116 (SOCIETE AUXITRA) * Page 1, column 2, line 23 - page 2, column 1, line 14; figure 1 * | 1 | |
| A | N.T.I.S. TECHNICAL NOTES, no. 10, October 1984, Part F, page 740, Springfield, Virginia, US; "Robotic control system for excavation equipment" --- -/- | 1 | |

The present search report has been drawn up for all claims

| Place of search | Date of completion of the search | Examiner |
|---|---|---|
| THE HAGUE | 07-12-1987 | ANGIUS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## European Patent Office
## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 586 184 (J.A. PESAVENTO et al.) | | |
| A | US-A-4 159 474 (D.M. WOOLDRIDGE) | | |
| A | US-A-3 009 271 (W. KUEHNE et al.) | | |

TECHNICAL FIELDS
SEARCHED (Int. Cl.4)

The present search report has been drawn up for all claims

| Place of search | Date of completion of the search | Examiner |
|---|---|---|
| THE HAGUE | 07-12-1987 | ANGIUS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)